# EUROPÄISCHE PATENTSCHRIFT

(11) **EP 0 890 737 B1**
(45) Veröffentlichungstag und Bekanntmachung des Hinweises auf die Patenterteilung: **09.10.2002**
(21) Anmeldenummer: 98112336.7
(22) Anmeldetag: 03.07.1998
(51) Int. Cl.: F02M 65/00, G01D 5/22

(54) **Elektromagnetisch gesteuerte Messvorrichtung zur volumetrischen Messung von Einspritzmengen einer Kraftstoffeinspritzpumpe**
Electromagnetically controlled measuring apparatus for volumetrically measuring injection quantities of a fuel injection pump
Dispositif de mesure à commande électromagnétique pour la mesure volumétrique des quantités injectées d' une pompe d'injection de carburant

(30) Priorität: 12.07.1997 DE 19729892
(43) Veröffentlichungstag der Anmeldung: 13.01.1999
(73) Patentinhaber: DaimlerChrysler AG, 70567 Stuttgart (DE)
(72) Erfinder: Müller, Manfred, 70199 Stuttgart (DE); Stenger, Claus, 70376 Stuttgart (DE); Ilg, Gebhard, 71336 Waiblingen (DE)

(56) Entgegenhaltungen:
- EP-A- 0 383 064
- DE-A- 3 916 419
- DE-C- 3 343 269

## Beschreibung

Die Erfindung betrifft eine elektromagnetisch gesteuerte Meßvorrichtung zur volumetrischen Messung von Einspritzmengen einer Kraftstoffeinspritzpumpe nach dem Oberbegriff des Patentanspruchs 1.

Eine derartige Meßvorrichtung ist aus der DE 39 16 419 C2 bekannt. Diese Meßvorrichtung besteht im wesentlichen aus einem gasdruckbelasteten, eine Hubstange aufweisenden und in einem Meßzylinder geführten Meßkolben, der eine Meßkammer von einer Gasdruckkammer trennt, ferner aus einem von Kühlräumen umgebennen Weggeber mit einem Differenzspulenpaar und einem darin axial verschiebbaren magnetisch leitfähigen Kern als ferromagnetischer Eisenkern, der mit der Hubstange verlötet ist.

Bei Messungen der jeweiligen Einspritzmengen mittels dieser Meßvorrichtung, die für den Einsatz von Dieseleinspritzsystemen bestimmt ist, werden hohe Anforderungen an die Linearität des Weggebers und hohe Anforderungen an die Unabhängigkeit des Maßstabfaktors von der Temperatur gestellt. Die Empfindlichkeit des Weggebers ändert sich aber in Abhängigkeit von der Temperatur zwangsläufig bei Einspritzsystemen, die mit relativ hohen und veränderlichen Drücken arbeiten, also direkteinspritzende Systeme, z.B. nach dem Common-Rail-Prinzip arbeitende Systeme.

Bei derartigen Systemen ändern die unter hohem Einspritzdruck eingespritzten Kraftstoffe mit dem jeweiligen Druck sehr schnell ihre Temperatur.

Der Erfindung liegt die Aufgabe zugrunde, bei der gattungsgemäßen Meßvorrichtung zur Messung des Meßkolbens die Meßgenauigkeit weiter zu erhöhen. Außerdem soll die Meßvorrichtung besonders für mit hohen Drücken arbeitende Einspritzsysteme geeignet sein, z.B. Common-Rail-Systeme.

Zur Lösung der Aufgabe dienen die im Kennzeichen des Patentanspruchs 1 angegebenen Merkmale.

In den Unteransprüchen sind noch förderliche Weiterbildungen der Erfindung angegeben.

Durch die erfindungsgemäßen Maßnahmen zur Unterdrückung der Wirbelströme, nämlich für den magnetisch leitfähigen Kern ferritisches Material und als Hubstange eine nicht magnetisierbaren Hülse zu verwenden, welche den ferritischen Kern fest umgibt und die zur Unterbrechung der kreisförmigen Strombahnen mit einem durchgehenden Schlitz versehen ist sowie außerdem das den Spulenträger umgebende Gehäuse entweder ebenfalls aus ferritischem Material zu fertigen oder aber aus nicht magnetisierbarem Material, wobei die Hülse dann aber mit zahlreichen zur Vermeidung von Wirbelströmen zum Spulenträger hin offenen Längsnuten zur Aufnahme von ferritischen Stäben ausgestattet ist, wird die Temperaturabhängigkeit des Maßstabfaktors im gewünschten Maß reduziert.

Es ergibt sich somit eine höhere Meßgenauigkeit.

Des weiteren ergibt sich eine präzisere Messung dadurch, daß beide Weggeberspulen jeweils in drei Abschnitte aufgeteilt sind, von denen die jeweils äußeren Abschnitte mit hoher Lagenzahl und nur der jeweils mittlere Abschnitt mit geringer Lagenzahl sehr sorgfältig Windung an Windung gewickelt ist (Anspruch 4) und zur Erzielung einer extrem guten Linearität lediglich die Länge des Kerns optimiert wird (Anspruch 5).

Die Erfindung ist in der Zeichnung dargestellt und im folgenden anhand eines Ausführungsbeispieles näher beschrieben. Es zeigen
- Fig. 1: den oberen Teil einer erfindungsgemäßen Meßvorrichtung im Längsschnitt, und zwar nach der Linie I-I in Fig.2 und
- Fig. 2: einen Schnitt durch den oberen Teil der Meßvorrichtung nach der Linie II-II in Fig.1.

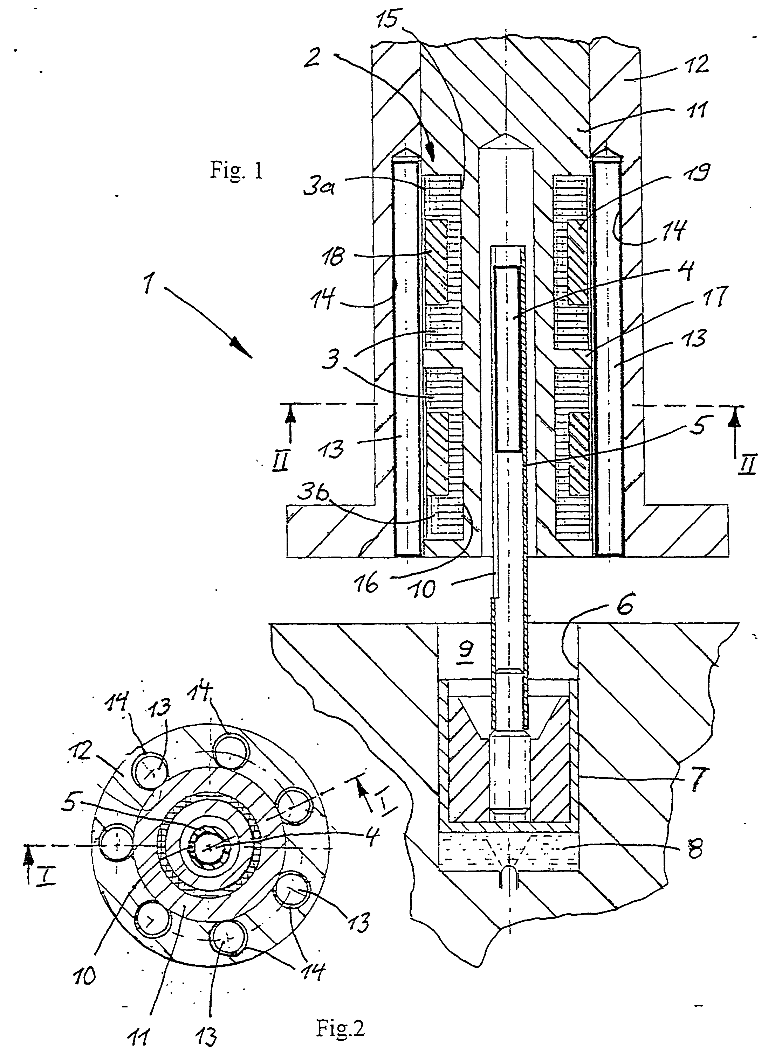

Eine elektromagnetisch gesteuerte Meßvorrichtung 1 zur volumetrischen Messung von Einspritzmengen einer nicht näher dargestellten Hochdruckpumpe zur Förderung des Kraftstoffes unter sehr hohem Druck (bis etwa 2000 bar) umfaßt gemäß Figur 1 einen induktiven Weggeber 2 mit einem Differenzspulenpaar 3 sowie einen darin axial verschiebbaren ferritischen Kern 4. Der ferritische Kern 4 besteht aus gesintertem Keramikpulver, durch den kein Strom hindurchfließen kann. Da dieses Material sehr spröde und brüchig ist, ist der ferritische Kern 4 von einer nicht magnetisierbare Hülse 5 fest umschlossen und in seiner ganzen Länge in die Hülse 5 eingeklebt, die als Halter für den Kern 4 dient.

Die als Halter wirkende Hülse 5 ist zugleich Hubstange und mit einem in einem Meßzylinder 6 geführten gasdruckbelasteten Meßkolben 7 fest verbunden, der eine Meßkammer 8 von einer Gasdruckkammer 9 trennt.

Die Hülse 5, die ein unmagnetisches Stahlröhrchen aus Inconel sein kann, ist zur Vermeidung von Wirbelströmen in ihrer Längsrichtung geschlitzt ausgeführt. Der Schlitz 10 erstreckt sich zumindest über die gesamte Länge des Differenzspulenpares 3.

Ein aus Kunststoff bestehender Spulenträger 11 nimmt das Differenzspulenpaar 3 auf und umgibt die Hülse 5 mit geringem Spiel. Der Spulenträger 11 sitzt fest in einem zylindrisch ausgebildeten Gehäuse 12.

Um zu verhindern, daß für das Gehäuse 12 spezielle Pressteile aus Ferrit gefertigt werden müssen, ist vorgesehen, dieses Gehäuse 12, welches nicht nur den Weggeber 2 aufnehmen soll, sondern auch gegen die bis zu 100 bar Stickstoff abdichten muß, aus nicht ferromagnetischem Metall, z.B. Messing, herzustellen und lediglich eine Anzahl von Ferritkernen in Form von langgestreckten Stäben 13 zu verwenden, die in Längsnuten 14 des Gehäuses 12 eingeklebt sind. Die Längsnuten 14 sind so angeordnet, daß ihre offene Seite zu den Spulen 3a, 3b des Spulenträgers 11 hin gerichtet ist, um Wirbelströme im Metallkörper zu vermeiden.

Die Längsnuten 14 mit den eingelegten Stäben 13 reichen über die gesamte Länge des Differenzspulenpaares 3 und sind gemäß Figur 2 gleichmäßig am Umfang des Gehäuses 12 verteilt. Die Nutenzahl kann dabei z.B. sechs bis acht betragen; im Ausführungsbeispiel sind sieben ferritische Stäbe 13 angeordnet.

In den Spulenträger 11 sind zwei ringförmige Ausnehmungen 15 und 16 für die Aufnahme der Spulen 3a,3b des Differenzspulenpaares 3 eingearbeitet. Die Spulen sind durch einen Außenbund 17 am Spulenträger 11 voneinander getrennt. Die unteren drei Lagen der beiden Spulen 3a, 3b sind sehr sorgfältig Windung an Windung gewickelt. Auf diese Windungen sind jeweils ein präzis gefertigter Kunststoffkörper 18,19 spulenlängsmittig aufgeklipst und in ihrer definierten Lage fixiert. Jeweils neben diesen beiden mittig liegenden Kunststoffkörpern 18,19 sind die außenmittig liegenden Spulenabschnitte mit weiteren Lagen bzw. Windungen aufgefüllt, wobei der nominelle Drahtdurchmesser z.B. 0,09 mm betragen kann.

Die Länge der Abschnitte und deren Lagen- und Windungszahlen sind hierbei so aufeinander abgestimmt, daß sich in dem erforderlichen Wegbereich des Weggebers 2 die gewünschte hohe Linearität durch Optimieren der Kernlänge erzielen läßt.

## Patentansprüche

1. Elektromagnetisch gesteuerte Meßvorrichtung (1) zur volumetrischen Messung von Einspritzmengen einer Kraftstoffeinspritzpumpe, mit einem von Kühlräumen umgebenden Weggeber (2) mit einem Differenzspulenpaar (3) und einem darin axial geführten magnetisch leitfähigen Kern (4) als Teil einer mit einem Meßkolben (7) verbundenen Hubstange (5), mit einem Spulenträger (11) und einem diesen Spulenträger umschließenden Gehäuse (12),
**dadurch gekennzeichnet,**
**daß** der magnetisch leitfähige Kern (4) aus ferritischem Material besteht und von einer die Hubstange bildenden und nichtmagnetisierbaren Hülse (5) fest umgeben ist, die mit einem in Längsrichtung der Hülse (5) durchgehend verlaufenden Schlitz (10) versehen ist.

2. Meßvorrichtung nach Anspruch 1,
**dadurch gekennzeichnet,**
**daß** der die Hülse (5) umgebende Spulenträger (11) aus Kunststoff besteht und das den Spulenträger (11) umschließende Gehäuse (12) zum Spulenträger (11) hin offene Längsnuten (14) mit eingelegten Stäben (13) aufweist, die mindestens so lang sind wie das Differenzspulenpaar (3).

3. Meßvorrichtung nach Anspruch 1 oder 2,
**dadurch gekennzeichnet,**
**daß** die in den Längsnuten (14) eingesetzten Stäbe (13) aus ferritischem Material bestehen, die in Umfangsrichtung des zylindrisch ausgebildeten und nicht magnetisierbaren Gehäuses (12) untereinander gleichmäßige Abstände haben.

4. Meßvorrichtung nach einem der vorhergehenden Ansprüche,
**dadurch gekennzeichnet,**
**daß** die koaxial zueinander liegenden Spulen (3a;3b) jeweils zumindest drei präzis gewickelte Lagen aufweisen und daß auf diese Lagen im längsmittigen Bereich der jeweiligen Spule (3a;3b) lagefixierende Kunststoffteile aufgeklipst sind und daß neben den Kunststoffteilen etwa fünf weitere außenmittig liegende Lagen gewickelt sind.

5. Meßvorrichtung nach Anspruch 1,
**dadurch gekennzeichnet,**
**daß** die Länge des beweglichen magnetisierbarem Kerns (4) durch mehrmaliges Messen einer Wegkennlinie mit verschieden langen Kernen bestimmbar ist.

## Claims

1. An electromagnetically controlled measurement device (1) for measuring the volume of fuel injected by a fuel injection pump with a travel sensor (2) surrounded by cooling chambers with a differential coil pair (3) running axially through which is a magnetically conductive core as part of a lifting rod (5) connected to a measurement piston (7), with a coil holder (11) and a housing (12) surrounding this coil holder (11),
**characterised in that**
the magnetically conductive core (4) is made of a ferritic material and is rigidly enclosed by a non-magnetizable sleeve (5) which forms the lifting rod and which is provided with a slit (10) which runs the length of the sleeve (5).

2. A measurement device in accordance with claim 1,
**characterised in that**
the coil holder (11) surrounding the sleeve (5) is made of plastic and the housing (12) surrounding the coil holder (11) has longitudinal grooves (14) open towards the coil holder (11) and containing rods (13) which are at least as long as the differential coil pair (3).

3. A measurement device in accordance with claim 1 or 2,
**characterised in that**
the rods (13) placed in the longitudinal grooves (14) are made of a ferritic material and are equally spaced about the circumference of the cylindrical, non-magnetizable housing (12).

4. A measurement device in accordance with one of the preceding claims,
**characterised in that**
the coils (3a, 3b) which are positioned coaxially in relation to one another each have at least three precisely wound layers and that clipped onto these layers in the longitudinal central area of the respective coils (3a, 3b) are locating plastic parts and that there area also some five further eccentric layers in addition to the plastic parts.

5. A measurement device in accordance with claim 1,
**characterised in that**
it is possible to determine the length of the movable, magnetizable core by measuring a travel characteristic with variously long cores several times.

## Revendications

1. Dispositif de mesure à commande électromagnétique (1) pour la mesure volumétrique de quantités d'injection d'une pompe d'injection de carburant, comportant un capteur de distance (2) entourant des chambres de refroidissement et possédant une paire de bobines différentielles (3), et un noyau magnétiquement conducteur (4), guidé axialement à l'intérieur de la paire de bobines et faisant partie d'une tige de levage (5) reliée à un piston de mesure (7), et comportant un porte-bobines (11) et un boîtier (12) entourant ce porte-bobines, **caractérisé en ce que** le noyau magnétiquement conducteur (4) est formé par un matériau ferritique et est entouré fermement par une douille non aimantable (5), qui forme la tige de levage et comporte une fente (10) qui s'étend continûment dans la direction longitudinale de la douille (5).

2. Dispositif de mesure selon la revendication 1, **caractérisé en ce que** le porte-bobines (11), qui entoure la douille (5), est réalisé en une matière plastique et le boîtier (12), qui entoure le porte-bobines (11), possède des rainures longitudinales (14) qui s'ouvrent en direction du porte-bobines (11) et dans lesquelles sont insérées des barreaux (13), qui sont au moins aussi longs que la paire de bobines différentielles (3).

3. Dispositif de mesure selon la revendication 1 ou 2, **caractérisé en ce que** les barreaux (13), qui sont insérés dans les rainures longitudinales (14) et sont séparés les uns des autres par des distances uniformes dans la direction circonférentielle du boîtier (12) non àimantable, agencé avec une forme cylindrique, sont réalisés en un matériau ferritique.

4. Dispositif de mesure selon l'une des revendications précédentes, **caractérisé en ce que** les bobines (3a; 3b) coaxiales entre elles comportent chacune au moins trois couches enroulées de façon précise, et que des pièces en matière plastique fixant les couches sont encliquetées sur ces couches dans la partie médiane, dans le sens longitudinal, de la bobine respective (3a; 3b) et qu'en dehors des pièces en matière plastique, par exemple cinq couches supplémentaires, disposées d'une manière excentrée, sont enroulées.

5. Dispositif de mesure selon la revendication 1, **caractérisé en ce que** la longueur du noyau mobile aimantable (4) peut être déterminée par une mesure multiple d'une courbe caractéristique de déplacement avec des noyaux de différentes longueurs.
